# EUROPÄISCHE PATENTSCHRIFT

(11) **EP 0 709 279 B1**
(45) Veröffentlichungstag und Bekanntmachung des Hinweises auf die Patenterteilung: **01.04.1998**
(21) Anmeldenummer: 95116628.9
(22) Anmeldetag: 21.10.1995
(51) Int. Cl.: B62D 25/08, B60K 5/12

(54) **Kraftfahrzeug-Vorderbau**
Front structure for automotive vehicles
Structure avant pour véhicules automobiles

(30) Priorität: 29.10.1994 DE 4438717
(43) Veröffentlichungstag der Anmeldung: 01.05.1996
(73) Patentinhaber: ADAM OPEL AG, 65423 Rüsselsheim (DE)
(72) Erfinder: Kiefer, Thomas, Dipl.-Ing. (TH), D-60435 Frankfurt/Main (DE)
(74) Vertreter: Bergerin, Ralf, Dipl.-Ing.

(56) Entgegenhaltungen:
- DE-B- 1 028 433
- GB-A- 2 151 193
- US-A- 3 252 211
- US-A- 4 392 545
- US-A- 5 267 630

## Beschreibung

Die Erfindung betrifft einen Kraftfahrzeug-Vorderbau mit einem Vorderrahmen, welcher an jeder Fahrzeugseite ein im wesentlichen in Fahrzeuglängsrichtung verlaufendes Vorderrahmenprofil mit einem Motorlager zur Befestigung einer Antriebseinheit aufweist.

Ein solcher Kraftfahrzeug-Vorderbau ist bei heutigen Personenkraftwagen üblich und deshalb bekannt. In einem solchen Kraftfahrzeug-Vorderbau wird die aus Motor und Getriebe bestehende Antriebseinheit mittels der Motorlager mit dem Vorderrahmen verbunden. Dabei ist man bestrebt, die Motorlager möglichst nahe der "neutralen Drehmomentachse" anzuordnen. Diese Achse entspricht in etwa der Schwerpunktachse und auch der gedachten Achse, um die die Antriebseinheit beim Beschleunigen sich im Motorraum gegen die Elastizität der Motorlager verschwenkt. Bei heute üblichen, quer eingebauten Antriebseinheiten, bei denen sich der Motor auf der rechten und das Getriebe auf der linken Seite befindet, verläuft diese neutrale Drehmomentachse auf der rechten Fahrzeugseite oberhalb des Vorderrahmens und durchdringt auf der linken Fahrzeugseite den Vorderrahmen, weil das Getriebe tiefer sitzt als der Motor. Die Anordnung des Motorlagers auf der neutralen Drehmomentachse bereitet deshalb auf der linken Fahrzeugseite keine Schwierigkeiten, weil man dort für die Anordnung des Motorlagers einen höckerartigen Lagerbock auf den Vorderrahmen setzen kann. Die durch den rechtsseitig tieferen Verlauf der neutralen Drehmomentachse erstrebenswerte Anordnung eines Motorlagers im Vorderrahmen konnte bisher jedoch noch nicht befriedigend gelöst werden, weil dadurch der Querschnitt des Vorderrahmens im Bereich des Motorlagers unzulässig stark geschwächt würde. Auch ein Einbau von zusätzlichen Verstärkungen in diesem Bereich ist nicht praktikabel, weil dieser Bereich schlecht zugänglich ist und weil sich durch solche Verstärkungen das Fahrzeuggewicht unerwünscht erhöhen würde. Auch das Crashverhalten kann durch solche Verstärkungen ungünstig beeinflußt werden.

In der Praxis behilft man sich damit, daß man die Antriebseinheit an der Seite des Getriebes ebenfalls auf der Oberseite des Vorderrahmens mit einem Motorlager abstützt. Dieses Motorlager ist deshalb relativ weit von der neutralen Drehmomentachse entfernt. Das führt zu einer erheblichen Komforteinbuße, weil durch eine solche Anordnung insbesondere beim Anfahren deutlich wahrnehmbare Vibrationen in die Fahrzeugkarosserie und in die Lenkung gelangen. Außerdem muß man bislang den Vorderrahmen im Bereich der Motorlager durch zusätzliche Einbauten verstärken, was zeitaufwendig ist und zu einer unerwünschten Gewichtserhöhung führt.

Der Erfindung liegt das Problem zugrunde, einen Kraftfahrzeug-Vorderbau der eingangs genannten Art so zu gestalten, daß zumindest ein Motorlager im Rahmenprofil eingebaut werden kann, ohne daß es zu einer unzulässigen Schwächung des Rahmenprofils kommt.

Dieses Problem wird erfindungsgemäß dadurch gelöst, daß zumindest an einer Fahrzeugseite das Vorderrahmenprofil aus zwei sich in einem Verbindungsbereich dort überlappenden Profilteilen besteht, wo die gedachte, neutrale Drehmomentachse der Antriebseinheit in das Vorderrahmenprofil eindringt, und daß in diesem Verbindungsbereich eine Durchbrechung für das Motorlager vorgesehen ist.

Durch diese Trennung des Vorderrahmenprofils in zwei sich dort überlappende Profilteile, wo ein auf der neutralen Drehmomentachse anzuordnendes Motorlager vorgesehen werden muß, ist es erstmals möglich, ein solches Motorlager im Vorderrahmenprofil einzubauen. Durch die Überlappung der Profilteile ergibt sich im Bereich der erforderlichen Durchbrechung für das Motorlager eine ausreichende Materialverstärkung, so daß es zu keiner unzulässigen Festigkeitseinbuße kommt und separate Verstärkungen unnötig werden. Weiterhin ergibt sich gegenüber dem Stand der Technik zusätzlich zu dem Gewinn an Fahrkomfort durch die Abstützung der Antriebseinheit auf der neutralen Momentachse der Vorteil, daß durch den Fortfall zusätzlicher Verstärkungen Teile und auch Gewicht eingespart werden. Für den Frontalaufprall vorteilhaft ist es, daß durch die Befestigung der Antriebseinheit im Vorderrahmen auf der neutralen Momentachse durch die Massenträgheit der Antriebseinheit keine Momente in den Vorderrahmen gelangen, sondern die Kräfte exakt in Längsrichtung des Vorderrahmens eingeleitet werden.

Eine vorteilhafte Weiterbildung der Erfindung besteht darin, daß beide Vorderrahmenprofile in zwei Profilteile aufgeteilt sind. Hierdurch wird erreicht, daß im Falle eines Crashs die Trägheitskräfte der Antriebseinheit unmittelbar auf die beiden vorderen Profilteile wirken. Dadurch kommt es zu einer Entlastung im hinteren Bereich des Vorderrahmens, so daß bei einem Frontalaufprall mit nicht zu hoher Geschwindigkeit ausschließlich im vorderen, leichter zu reparierenden Bereich Schäden auftreten. Solche Schäden sind ebenfalls im Hinblick auf die erfindungsgemäße Trennung des Vorderrahmenprofils leichter zu reparieren. Hinzu kommt, daß man durch die erfindungsgemäße Trennung der Vorderrahmenprofile beide Profilteile unabhängig voneinander für die unterschiedlichen Anforderungen optimieren kann.

Fertigungstechnisch ist es besonders vorteilhaft, wenn das hintere Profilteil nach oben hin offen und in etwa U-förmig ist, dessen dem Motorraum abgewandter Schenkel im Verbindungsbereich entfernt wurde, so daß ein vorspringendes Profilstück entsteht, und wenn das vordere Profilteil zur Seite nach außen hin offen und U-förmig ist, welches mit seiner dem Motorraum zugewandten, vertikal ausgerichteten Basis von der Fahrzeugaußenseite und von oben her gegen das vorspringende Profilstück des hinteren Profilteils anliegt.

Eine besonders gute Anpassung an unterschiedliche Anforderungen in unterschiedlichen Bereichen des Kraftfahrzeug-Vorderbaus, insbesondere bezüglich des Crashverhaltens, wird möglich, wenn gemäß einer anderen Weiterbildung der Erfindung das vordere und das hintere Profilteil eine unterschiedliche Blechstärke aufweist.

Vorteilhaft ist es auch, wenn das hintere Profilteil von oben her durch ein Bodenblech des Kraftfahrzeugs geschlossen ist. Eine solche Ausführungsform hat gegenüber der bisherigen Bauweise wesentliche akustische Vorteile. Bislang wurde das Vorderrahmenprofil üblicherweise als ein durchgehendes, zur Seite hin offenes, U-förmiges Profil ausgebildet, welches eine unmittelbare Verbindung zu den seitlichen Schwellern des Kraftfahrzeugs hat. Dadurch konnte bisher Schall aus dem Motorraum auf dem Luftweg in die Schweller und von dort durch stets vorhandene Öffnungen in den Fahrzeuginnenraum gelangen. Solche Öffnungen sind beispielsweise im Bereich der mit dem jeweiligen Schweller verbundenen B-Säule für den Anschnallgurt vorhanden. Da das hintere Profilteil gemäß der Erfindung nach oben hin offen ist, wird es durch die Stirnwand und das Bodenblech des Kraftfahrzeugs zum Fahrzeuginnenraum hin vollständig dicht abgedeckt, so daß Luftschall nicht aus ihm unmittelbar in den Fahrzeuginnenraum gelangen kann.

Der Radeinbau ist optimal an dem Profilrahmen zu befestigen, wenn das vordere Profilteil an der Außenseite seines oberen, horizontal ausgerichteten Profilsteges einen nach oben gerichteten, über seine Länge verlaufenden Anschlußflansch für den Radeinbau hat.

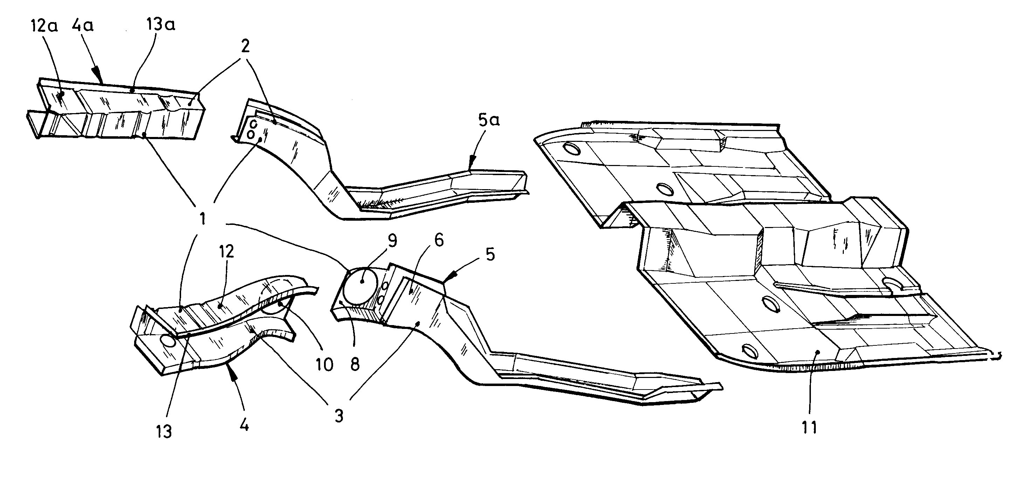

Die Erfindung erlaubt zahlreiche Ausführungsformen. Zur weiteren Verdeutlichung ihres Grundprinzips ist eine davon in der Zeichnung dargestellt und wird nachfolgend beschrieben. Diese zeigt in einer einzigen Figur eine Explosionszeichnung der für die Erfindung wesentlichen Teile eines erfindungsgemäßen Kraftfahrzeugvorderbaus.

Die Zeichnung zeigt von einem Kraftfahrzeug-Vorderbau einen Vorderrahmen 1 mit zwei jeweils an einer Fahrzeugseite im wesentlichen in Fahrzeuglängsrichtung verlaufenden Vorderrahmenprofilen 2, 3. Diese Vorderrahmenprofile 2, 3 bestehen jeweils aus zwei miteinander verbundenen Profilteilen 4, 5.

Das hintere Profilteil 5 ist nach oben hin offen. Sein äußerer Schenkel 6 wurde im Verbindungsbereich weggetrennt, so daß dort ein vorspringendes Profilstück 8 entsteht, welches in einer zum Motorraum hin gerichteten Fläche eine Durchbrechung 9 für ein nicht gezeigtes Motorlager hat. Das Profilteil 4 hat eine entsprechende Durchbrechung 10, welche im zusammengesetzten Zustand der Profilteile 4, 5 mit der Durchbrechung 9 fluchtet. Das vordere Profilteil 4 ist als ein zur Seite hin offenes, U-förmiges Profilteil ausgebildet und optimal für die Bedingungen bei einem Crash gestaltet.

In der Zeichnung ist rechts vom Vorderrahmen 1 ein Bodenblech 11 dargestellt. Dieses kommt beim Zusammenbau von oben her auf den jeweils hinteren Bereich der hinteren Profilteile 5 bzw. 5a zu liegen und schließt deshalb die nach oben hin offenen Profilteile 5 zum Fahrzeuginnenraum hin ab.

Zur Befestigung des nicht gezeigten Radeinbaus hat das jeweilige vordere Profilteil 4, 4a an seinem horizontal verlaufenden, oberen Profilsteg 12, 12a einen vertikal nach oben gerichteten Anschlußflansch 13, 13a.

## Patentansprüche

1. Kraftfahrzeug-Vorderbau mit einem Vorderrahmen, welcher an jeder Fahrzeugseite ein im wesentlichen in Fahrzeuglängsrichtung verlaufendes Vorderrahmenprofil mit einem Motorlager zur Befestigung einer Antriebseinheit aufweist, **dadurch gekennzeichnet**, daß zumindest an einer Fahrzeugseite das Vorderrahmenprofil (2, 3) aus zwei sich in einem Verbindungsbereich dort überlappenden Profilteilen (4, 5) besteht, wo die gedachte, neutrale Drehmomentachse der Antriebseinheit in das Vorderrahmenprofil (3) eindringt, und daß in diesem Verbindungsbereich eine Durchbrechung (9, 10) für das Motorlager vorgesehen ist.

2. Kraftfahrzeug-Vorderbau nach Anspruch 1, **dadurch gekennzeichnet**, daß beide Vorderrahmenprofile (2, 3) in zwei Profilteile (4, 5) aufgeteilt sind.

3. Kraftfahrzeug-Vorderbau nach den Ansprüchen 1 oder 2, **dadurch gekennzeichnet**, daß das hintere Profilteil (5) nach oben hin offen und in etwa U-förmig ist, dessen dem Motorraum abgewandter Schenkel (6) im Verbindungsbereich entfernt wurde, so daß ein vorspringendes Profilstück (8) entsteht, und daß das vordere Profilteil (4) zur Seite nach außen hin offen und U-förmig ist, welches mit seiner dem Motorraum zugewandten, vertikal ausgerichteten Basis von der Fahrzeugaußenseite und von oben her gegen das vorspringende Profilstück (8) des hinteren Profilteils (5) anliegt.

4. Kraftfahrzeug-Vorderbau nach zumindest einem der vorangehenden Ansprüche, **dadurch gekennzeichnet**, daß das vordere und das hintere Profilteil (4, 5) eine unterschiedliche Blechstärke aufweist.

5. Kraftfahrzeug-Vorderbau nach zumindest einem der vorangehenden Ansprüche, **dadurch gekennzeichnet**, daß das hintere Profilteil (5) von oben her durch ein Bodenblech (11) des Kraftfahrzeugs geschlossen ist.

6. Kraftfahrzeug-Vorderbau nach zumindest einem der vorangehenden Ansprüche, **dadurch gekennzeichnet**, daß das vordere Profilteil (4, 4a) an der Außenseite seines oberen, horizontal ausgerichteten Profilsteges (12, 12a) einen nach oben gerichteten, über seine Länge verlaufenden Anschlußflansch (13, 13a) für den Radeinbau hat.

## Claims

1. Motor vehicle front end with a front frame which on each side of the vehicle comprises a front frame profile extending essentially in the longitudinal direction of the vehicle with an engine mount for fixing a drive unit, characterised in that on at least one side of the vehicle the front frame profile (2, 3) consists of two profile portions (4, 5) overlapping in a connecting region at the point where the imaginary neutral torque axis of the drive unit enters the front frame profile (3), and in that an aperture (9, 10) for the engine mount is provided in this connecting region.

2. Motor vehicle front end according to claim 1, characterised in that both front frame profiles (2, 3) are divided into two profile portions (4, 5).

3. Motor vehicle front end according to claim 1 or 2, characterised in that the rear profile portion (5) is open at the top and more or less U-shaped, whose arm (6) facing away from the engine compartment has been removed in the connecting region, so that a projecting profile piece (8) is formed, and in that the front profile portion (4) is open to the outside at the side and U-shaped, which abuts by its vertically oriented base facing towards the engine compartment from the outside of the vehicle and from above against the projecting profile piece (8) of the rear profile portion (5).

4. Motor vehicle front end according to one or more of the preceding claims, characterised in that the front and rear profile portions (4, 5) have different sheet metal thicknesses.

5. Motor vehicle front end according to one or more of the preceding claims, characterised in that the rear profile portion (5) is closed from above by a floor panel (11) of the motor vehicle.

6. Motor vehicle front end according to one or more of the preceding claims, characterised in that the front profile portion (4, 4a) has, on the outside of its upper horizontally oriented profile web (12, 12a), an upwardly directed connecting flange (13, 13a) extending over its length for wheel fitting.

## Revendications

1. Structure avant de véhicule automobile comportant un châssis antérieur avec de chaque côté du véhicule un profilé de châssis avant qui s'étend essentiellement dans la direction longitudinale du véhicule et porte un support de moteur pour la fixation d'une unité de propulsion, caractérisée par le fait que d'un côté au moins du véhicule, le profilé de châssis avant (2, 3) est formé de deux éléments de profilé (4, 5) qui se chevauchent dans une zone de liaison dans laquelle l'axe des moments neutre, imaginaire, de l'unité de propulsion entre dans le profilé de châssis avant (3) et par le fait qu'une ouverture (9, 10) est prévue dans cette zone de liaison pour le support de moteur.

2. Structure avant de véhicule automobile selon la revendication 1, caractérisée par le fait que les deux profilés de châssis avant (2, 3) sont divisés en deux éléments de profilé (4, 5).

3. Structure avant de véhicule automobile selon la revendication 1 ou 2, caractérisée par le fait que l'élément de profilé postérieur (5) est ouvert vers le haut et a sensiblement une conformation en U dont l'aile (6) tournée vers l'espace moteur a été supprimée dans la zone de liaison, de manière à former un tronçon de profilé (8) saillant et par le fait que l'élément de profité antérieur (4) est ouvert du côté tourné vers l'extérieur et a sensiblement une conformation en U qui par sa base verticale tournée vers l'espace moteur est appliquée depuis le côté extérieur du véhicule et par le haut contre le tronçon de profilé (8) saillant de l'élément de profité postérieur (5).

4. Structure avant de véhicule automobile selon au moins une des revendications précédentes, caractérisée par le fait que les éléments de profilé antérieur et postérieur (4, 5) présentent des épaisseurs de tôle différentes.

5. Structure avant de véhicule automobile selon au moins une des revendications précédentes, caractérisée par le fait que le tronçon de profilé postérieur (5) est fermé sur le dessus par un fond en tôle (11) du véhicule.

6. Structure avant de véhicule automobile selon au moins une des revendications précédentes, caractérisée par le fait que le tronçon de profilé antérieur (4, 4a), sur la face extérieure de son aile (12, 12a) supérieure horizontale, est muni d'une bride de fixation (13, 13a) dirigée vers le haut qui s'étend sur toute sa longueur pour le montage de la roue.
